# EUROPEAN PATENT APPLICATION

(11) **EP 3 036 987 A1**
(43) Date of publication of application: **29.06.2016**
(21) Application number: 15201980.8
(22) Date of filing: 22.12.2015
(51) Int. Cl.: A01G 25/09, A01M 7/00, A01M 1/06

(54) **MOBILE PLANT SERVICE SYSTEM AND COMPONENTS THEREFOR**

(30) Priority: 24.12.2014 US 201414582259
(71) Applicant: Microware Limited, Gibraltar (GI)
(72) Inventor: KABAKOV, Bentsion, Queensway Quay (GI)
(74) Representative: Gallo, Luca

(57) **Abstract**

A mobile plant service system for treating plants in a crop growing area includes a transport device deployed for moving across the crop growing area. A spraying apparatus mounted to the transport device for delivering an atomized liquid to the plants in the crop growing area includes a plurality of spray nozzles, a pressure vessel for storing compressed air, a pressure regulating valve assembly, and a receptacle containing a liquid. A flow controller actuates the pressure regulating valve assembly to allow the flow of a controlled release of compressed air to the plurality of spray nozzles at a spray out pressure.

## Description

### FIELD AND BACKGROUND OF THE INVENTION

The present invention relates to plant service systems.

It is known that the delivery of a liquid spray to plants is possible by the use of spray device. Such sprays are typically created by combining compressed air and a liquid in order to generate an atomized spray. The generation of a fine spray, as is useful for non-toxic pesticide sprays, requires the release of compressed air at pressure levels which are typically higher than for coarse sprays. However, such spray devices are limited in mobility as they require a fixed connection to a remote air compressor. Alternatively, a high voltage power supply in connection with an air compressor may be locally connected to a spray device. However, the use of high voltage equipment in a wet environment, such as a greenhouse, increases the risk of electric shock, equipment damage, and other safety hazards.

### SUMMARY OF THE INVENTION

The present invention is a system and corresponding components for providing a mobile plant service functionality. The invention is of particular value in the context of sustainable urban farming, including rooftop greenhouses, and networks of commercial greenhouses that are operated from a common control center.

According to the teachings of an embodiment of the present invention there is provided, a mobile plant service system for treating plants in a crop growing area comprising: (a) a transport device deployed for moving across the crop growing area; (b) a spraying apparatus mounted to the transport device for delivering an atomized liquid to the plants in the crop growing area, comprising: (i) a plurality of spray nozzles; (ii) a pressure vessel in fluid flow connection with the plurality of spray nozzles configured for storing compressed air at a storage pressure; (iii) a pressure regulating valve assembly in fluid flow connection with the pressure vessel; (iv) a receptacle containing a liquid in fluid flow connection with the spray nozzles; (c) a flow controller associated with the pressure regulating valve assembly; and (d) a rechargeable power supply deployed to provide power to the flow controller, wherein the flow controller is configured to actuate the pressure regulating valve assembly to allow the flow of a controlled release of compressed air to the plurality of spray nozzles at a spray out pressure.

According to a further feature of an embodiment of the present invention, the transport device is a gantry.

According to a further feature of an embodiment of the present invention, the mobile plant service system for treating plants in a crop growing area further comprises a plurality of fans mounted to the gantry; wherein each of the fans has variable rotary speeds and directions of rotation, and wherein each of the fans is associated with a fan controller, and wherein the fan controller is configured to selectively actuate each of the fans to independently operate in a plurality of operational modes, and wherein each of the operational modes corresponds to at least one rotary speed and direction of rotation.

According to a further feature of an embodiment of the present invention, each of the fans has variable blade angles, and wherein each of the operational modes corresponds to at least one rotary speed, direction of rotation, and blade angle.

According to a further feature of an embodiment of the present invention, the mobile plant service system for treating plants in a crop growing area further comprises an actuator associated with the fan controller; wherein the actuator is configured to adjust a pointing angle of each of the fans.

According to a further feature of an embodiment of the present invention, the actuator is further configured to adjust a blade angle of each of the fans.

According to a further feature of an embodiment of the present invention, the flow controller and the fan controller are implemented as a single processing system having at least one processor.

According to a further feature of an embodiment of the present invention, the operation modes include: (i) a pest reduction mode, wherein any or all of the fans operate to create a suction air flow whereby pests in proximity of a fan are sucked into the blades of the fan; (ii) a plant stressing mode, wherein any or all of the fans operate at angles and speeds designed to stress a specified plant; and (iii) a pollination mode, wherein any or all of the fans operate at angles and speeds designed for artificial pollination of specified plants.

According to a further feature of an embodiment of the present invention, the mobile plant service system for treating plants in a crop growing area further comprises a plurality of nets with a sieve opening size of at most 0.5 millimeters, wherein the nets are attached to the fans; and wherein the nets are configured to retain pests sucked into the fans when operating in the pest protection mode.

According to a further feature of an embodiment of the present invention, the mobile plant service system for treating plants in a crop growing area further comprises a plurality of wheel assemblies mounted to the gantry, wherein each of the wheel assemblies comprises: (i) at least one wheel; (ii) a braking arrangement associated with the at least one wheel; (iii) a drive system associated with the at least one wheel; and (iv) a wheel controller associated with the braking arrangement and the drive system, wherein the at least one wheel is configured to operate along a profile disposed about the periphery of the crop growing area, and wherein the rechargeable power supply is deployed to provide power to the drive system, and wherein the wheel controller is configured to actuate the drive system to rotate the at least one wheel at an adjustable direction of rotation and to selectively operate the braking arrangement.

According to a further feature of an embodiment of the present invention, the mobile plant service system for treating plants in a crop growing area further comprises a home station with a stationary charging arrangement; wherein the gantry has a home position in the home station, and wherein the stationary charging arrangement is configured to come into operative cooperation with the rechargeable power supply when the gantry is in the home position.

According to a further feature of an embodiment of the present invention, the home station further comprises a compressed air filling linkage associated with a mains voltage power supply; wherein the compressed air filling linkage is deployed for connection with the pressure vessel when the gantry is in the home position, and wherein the mains voltage power supply is an alternating current (AC) power supply configured to supply a voltage of at least 100 volts AC.

According to a further feature of an embodiment of the present invention, the mobile plant service system for treating plants in a crop growing area further comprises a platform mounted to the gantry, wherein the platform extends along a majority of the gantry.

According to a further feature of an embodiment of the present invention, the mobile plant service system for treating plants in a crop growing area further comprises a lifter mounted to the gantry; wherein the lifter is configured to lift growing troughs containing plants grown by hydroponics and/or aeroponics.

According to a further feature of an embodiment of the present invention, the mobile plant service system for treating plants in a crop growing area further comprises at least one RFID reader mounted to the gantry and operable to transmit an interrogator signal and to receive an authentication signal, such that, wherein the at least one RFID reader passes over an RFID tag in a growing trough and transmits interrogator signals, authentication signals are generated, thereby indicating a position of the growing trough and a treatment type for the plants in the crop growing area.

According to a further feature of an embodiment of the present invention, the storage pressure is in a range from 5 atm to 12 atm.

According to a further feature of an embodiment of the present invention, the spray output pressure is in a range from 3 atm to 4 atm.

According to a further feature of an embodiment of the present invention, the receptacle is a reservoir containing a liquid; and wherein the reservoir is in fluid flow connection with the pressure vessel, and wherein the pressure vessel is further configured to pressurize the liquid in the reservoir.

According to a further feature of an embodiment of the present invention, the rechargeable power supply is a direct current (DC) power supply configured to supply a voltage of no more than 25 volts DC.

According to a further feature of an embodiment of the present invention, the mobile plant service system for treating plants in a crop growing area further comprises a pump associated with the rechargeable power supply and in fluid flow connection with the pressure vessel, wherein the flow controller is further configured to actuate the pump to pressurize the pressure vessel.

According to a further feature of an embodiment of the present invention, the spraying apparatus is configured to generate spray with a liquid droplet size in a range from 8-50 microns.

### BRIEF DESCRIPTION OF THE DRAWINGS

The invention is herein described, by way of example only, with reference to the accompanying drawings, wherein:
FIG. 1 illustrates a schematic diagram of spraying system mounted to a transport device according to an embodiment of the invention;
FIG. 2 illustrates a schematic diagram of a pressure regulating valve assembly according to an embodiment of the invention;
FIG. 3 illustrates a schematic diagram of a motorized gantry according to an embodiment of the invention;
FIG. 4 illustrates a schematic diagram of a motorized gantry in a home position according to an embodiment of the invention; and
FIG. 5 illustrates a schematic diagram of pressure vessels as a structural component of a gantry.

### DESCRIPTION OF THE PREFERRED EMBODIMENTS

The present invention is a system and corresponding components for providing a mobile plant service functionality.

The principles and operation of a system and corresponding components according to the present invention may be better understood with reference to the drawings and the accompanying description.

The present invention is applicable to various techniques of crop growing, and is of particular value when applied to mechanized production-line-type growing areas in which plants are cultivated in containers, such as growing troughs or the like, which advance from a planting location to a harvesting location. The potential applications of the present invention should not be limited to the applications used for the purposes of illustrating the principles and operation of a system and corresponding components according to the present invention.

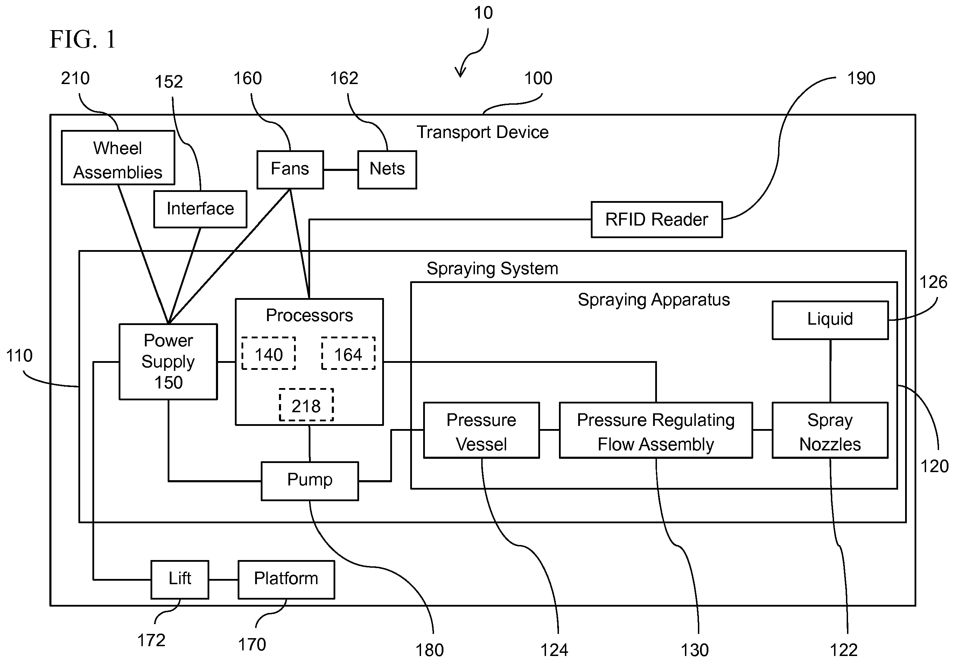

Referring now to the drawings, FIG. 1 is an overall schematic diagram of a system **10** and corresponding components for providing a mobile plant service functionality. With reference to FIG. 1, major elements of system **10** preferably include a transport device **100** for moving across a crop growing area and a spraying system **110** preferably mounted to the transport device **100.** Spraying system **110** preferably includes a spraying apparatus **120** for delivering an atomized liquid to plants in the crop growing area, a flow controller **140** for regulating the flow of liquid from the spraying apparatus **120,** and a rechargeable power supply **150** deployed to supply power to flow controller **140.** For the purpose of this document, power supplies of at least 100 volts AC or DC are defined as "mains voltage power supply" or "high voltage", whereas power supplies and devices operating on voltages of no more than 25 volts are termed "low voltage". In more specific terms, a mains voltage power supply in the United States typically supplies power in the range of 100-120 volts AC, while a mains voltage power supply in Europe typically supplies power in the range of 220-240 volts AC. It is preferred that the rechargeable power supply is a rechargeable battery of low voltage in order to mitigate the possibility of electric shock or other hazards from operating in a high-moisture environment. Rechargeable power supply **150** is preferably a rechargeable battery with a maximum voltage of 24 volts DC, and typically 12 volts DC. Most preferably, rechargeable power supply **150** is a lead-acid car battery of 12 volts DC. Spraying apparatus **120** preferably includes a plurality of spray nozzles **122,** a pressure vessel **124** in fluid flow connection with the spray nozzles **122,** a pressure regulating valve assembly **130** in fluid flow connection with pressure vessel **124,** and a receptacle **126** in fluid flow connection with spray nozzles **122** for containing a liquid that is to be atomized. Types of atomized liquid may include, but are not limited to, nutrient rich solutions and pesticide solutions. Preferably, the pesticide solutions are natural pesticides which are non-toxic to humans. Examples of non-toxic pesticide solutions include, but are not limited to, copper sulphate potassium hydrogen carbonate solutions, pyrethrum solutions, azadirachtin solutions, and solutions based on neem oil. Such non-toxic pesticide solutions may be less potent than toxic pesticides. Non-toxic pesticides may therefore need greater coverage and penetration of the plants in the crop growing area in order to achieve an equivalent effect to alternative techniques using toxic pesticides. It is therefore advantageous to generate an atomized mist to facilitate the coverage and penetration of the plants in the crop growing area by non-toxic pesticides. Pressure vessel **124** acts as an accumulator storing pressure for use over a period of time. Preferably, pressure vessel **124** is a tank of compressed air, hereinafter referred to as a tank, configured to store compressed air at a storage pressure. Preferably, tank **124** may be re-pressurized by a pressure source.

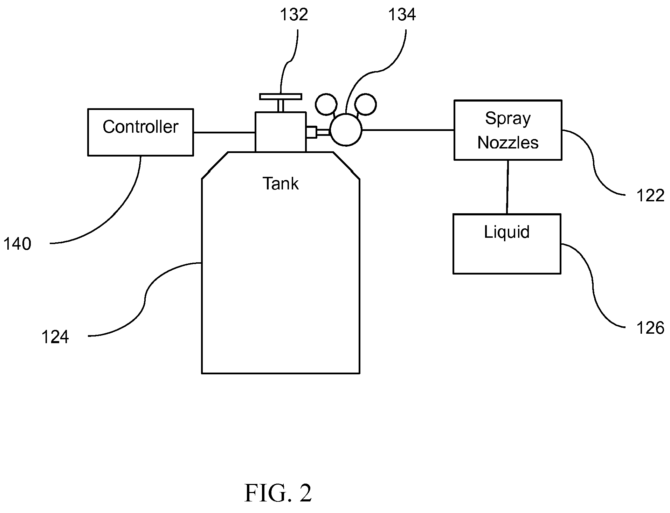

Preferably, pressure regulating valve assembly **130** is configured to control the air flow to spray nozzles **122** from tank **124** when actuated by flow controller **140.** Preferably, the air pressure of the compressed air that is delivered to the spray nozzles is selectively reduced by pressure regulating valve assembly **130** when actuated by flow controller **140.** With reference to FIG. 2, major elements of pressure regulating valve assembly **130** preferably include a valve **132** configured to operate in an open position and in a closed position, and a pressure regulator **134** configured to regulate the output air pressure of tank **124.** It is preferred that when valve **132** is in the closed position, air is prevented from flowing out of tank **124.** Furthermore, it is preferred that when valve **132** is in the open position, there is an impedance of low air flow from tank **124.** Preferably, pressure regulator **134** is configured to selectively regulate the output air pressure of tank **124** by reducing the air pressure to a spray out pressure when the compressed air is delivered to spray nozzles **122.** The functions of opening valve **132,** closing valve **132,** and regulating the output air pressure of tank **124** are performed when actuated by flow controller **140.** Preferably, the maximum storage pressure in tank **124** is in the range of 5-12 atmospheres (atm). Preferably, the spray out pressure of the compressed air delivered to spray nozzles **122** from tank **124** is in the range of 2-5 atmospheres (atm), and is typically in the range of 3-4 atmospheres (atm). It is preferable that when the spray out pressure falls below the minimum pressure of the preferred spray out pressure range, tank **124** is re-pressurized in order to facilitate the spraying process. The liquid in receptacle **126** is preferably delivered to spray nozzles **122** by a suitable technique, including, but not limited to, Venturi suction, pressurization of the liquid, and pumping the liquid via pumping system or the like. Preferably, the liquid and the compressed air are combined in an atomizer spray head to generate an atomized mist for delivering to the plants in the crop growing area. The spray out pressure range facilitates that the atomized liquid be delivered at variable flow rates. Preferably, the spray out pressure range also allows for the atomized liquid to contain liquid droplets in the range of 8-150 microns, and is typically in the range of 8-50 microns. The small liquid droplet size of the mist results in a larger surface contact area of the liquid with the plants in the crop growing area. Although the system described thus far has pertained to a liquid being moved from a receptacle **126** to spraying nozzles **122** via a pump or the like, other embodiments are possible in which the liquid to be atomized is stored in a reservoir that is in fluid flow connection with tank **124.** In such an embodiment, tank **124** may be configured to pressurize the liquid in the reservoir prior to the delivery of the liquid to spray nozzles **122.** Spraying system **110** is preferably mounted to transport device **100** in order to maximize the range and precision of the atomized spray. Types of transport devices **100** include, but are not limited to, gantries, carts, and ceiling mounted trolleys.

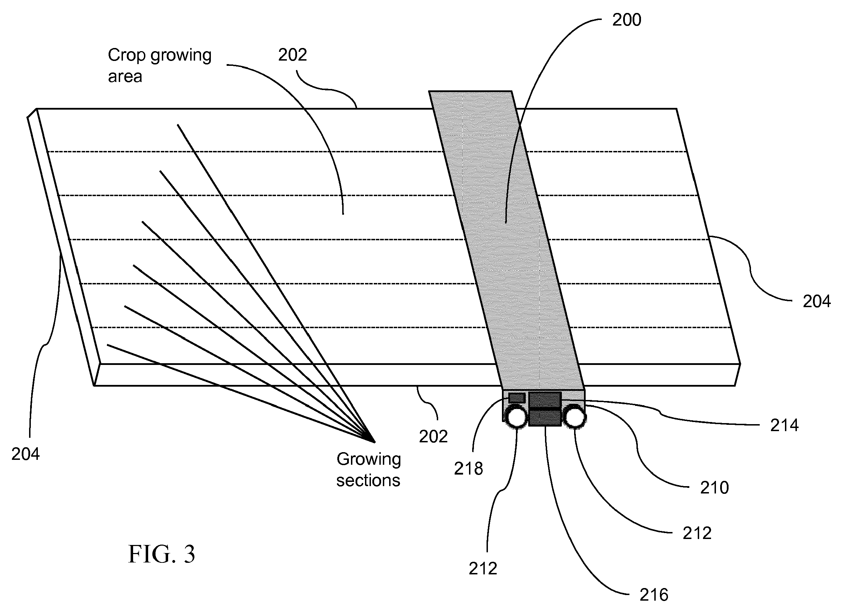

According to certain preferred embodiments, the transport device is a gantry **200** which extends across the entire width of a crop growing area as depicted in FIG. 3. The crop growing area may be defined by lateral borders **202** and ends **204** and may be subdivided into multiple growing sections. The length of gantry **200** is sufficient to provide spray coverage over the entire area under the gantry, not including any mechanical support elements which extend outside of the crop growing area. Preferably, gantry **200** is made moveable by a plurality of wheel assemblies **210** attached to mechanical support elements of gantry **200.** Major elements of a wheel assembly **210** preferably include at least one wheel **212,** a drive system **214** for rotating the at least one wheel **212** at an adjustable direction of rotation, a braking arrangement **216,** and a wheel controller **218** for selectively actuating drive system **214** and braking arrangement **216.** It is preferable that rechargeable power supply **150** is deployed to supply power to the drive system **214** of each wheel assembly **210** and to the wheel controller **218** associated with the wheel assemblies **210.** Each drive system **214** preferably includes a DC motor for providing speed control and rotational direction control. Gantry **200** may stop moving when the power to the motor of each drive system **214** is interrupted. In this case, the stopping of gantry **200** is due to the removal of an externally supplied rotational force coupled with the natural force of friction between the at least one wheel **212** and the surface along which the at least one wheel **212** operates. While friction may be the primary impetus for stopping the motion of gantry **200,** minor variations in the position of gantry **200** may occur while performing various procedures, including, but not limited to, the spraying of plants under gantry **200.** Braking arrangement **216** may be configured to provide stability to gantry **200** when the gantry is stopped. The functionality of braking arrangement **216** should not be limited to providing stability. Braking arrangement **216** may be further configured to contribute to the stopping of gantry **200** while power is being provided to the motor of drive system **214.** Types of braking arrangements **216** may include, but are not limited to, drum brakes, disk brakes, and hydraulic brakes. However, in many cases, a simple braking arrangement **216** is used where a brake pad is configured to press down on the at least one wheel **212** when actuated by wheel controller **218.** Flow controller **140** and wheel controller **218** may be implemented using a single processing system with one or more processor in order to provide control functionality by a single device for regulating the flow of liquid from spraying apparatus **120** and for controlling the braking arrangement **216** and the drive system **214** of each wheel assembly **210.** It is preferred that the elements of all the wheel assemblies **210** be synchronized such that the direction of rotation and speed of rotation of all wheels **212** mounted to the gantry **200** is uniform. The wheel assemblies **210** are preferably configured to operate along the perimeter of the crop growing area. Preferably, a solid frame structure is disposed along lateral borders **202** of the crop growing area. Types of materials used for constructing the frame may include, but are not limited to, steel, aluminum, and other suitable materials capable of supporting weights an order of magnitude greater than the weight of gantry **200.** Preferably, the drive system **214** of each wheel assembly **210** is configured to drive one wheel of the wheel assembly **210.** Preferably, the wheels **212** of each wheel assembly **210** are configured to operate along a suitably shaped profile such as a track or the like. Preferably, the upper portion of the frame structure is constructed to serve as a suitably shaped profile. Other embodiments are possible in which a rail track system is attached to the frame structure by hardware fasteners or the like. The rail track system may also be welded to the frame structure. In such an embodiment, the wheels **212** of each wheel assembly **210** are configured to operate along the rail track portion of the frame structure. Since the wheels **212** of each wheel assembly **210** are configured to operate along the upper portion of the frame structure, the portion of the greenhouse dedicated to the crop growing area is increased thereby maximizing the usable proportion of the available area. The controlled delivery of the atomized spray may be aided by devices which focus the delivery of the spray in a specified direction, including, but not limited to, fans, blowers, and air vents.

According to certain preferred embodiments, a plurality of fans **160** is mounted to gantry **200.** Preferably each fan **160** is supplied power by rechargeable power supply **150.** Preferably, each fan **160** is equipped with at least one motorized impeller with at least three impeller blades, more preferably at least five, and most preferably at least seven blades. The use of a relatively large number of blades has been found to improve the efficiency of the fan in functioning as a mechanical pest control device, effectively breaking up the bodies of insects that are drawn by airflow into the fans. Preferably, each motorized impeller is operable at various speeds as well as being operable in a clockwise direction of rotation and a counter clockwise direction of rotation to selectively provide blowing and suction. Preferably, the pitch angle of the impeller blades is adjustable, most preferably while the motorized impeller is rotating. An example of a fan with adjustable impeller blade pitch angle during impeller rotation is the "Variable Pitch Axial Fan" of Twin City Fan Companies Ltd. Clarage division. Varying the blowing and suction air flow generated by a fan can be achieved by adjusting the impeller rotational speed and the pitch angle of the impeller blades in any combination. The variable pitch angle of the impeller blades provides greater control of the airflow as well as a reduction in the power consumed by the fans. Preferably, each fan **160** has a dedicated fan controller **164** supplied power by rechargeable power supply **150** for providing control functionality to the motorized impellers of individual fans **160.** Flow controller **140** and the fan controller(s) **164** may be implemented using a single processing system having one or more processor in order to provide control functionality by a single device for regulating the flow of liquid from spraying apparatus **120** and for providing coordinated control functionality to all fans. It is preferred that each fan **160** is mounted to gantry **200** via an adjustable mounting device in order to facilitate variable fan pointing angles. Types of adjustable mounting devices include, but are not limited to, pivot mountings and mountings with ball and socket joints. Preferably an actuator is associated with fan controller **164** and the adjustable mounting of each fan **160** in order to selectively control the pointing angle of individual fans **160.** The impeller blade pitch angle of each fan may be adjusted manually or via an actuator associated with fan controller **164** and the impeller blades. The fans may be used for multiple purposes, including, but not limited to, distributing the atomized liquid to the plants, promoting pollination, stressing the plants to increase sustainability, and pest reduction. It is preferred that each fan **160** is equipped with at least one trap **162** configured to retain live insects which may get sucked through a fan by a fan's motorized impellers. Preferably, trap **162** is a netting of fine mesh with a sieve opening size in the range of 0.1-0.5 mm. It is preferred that the netting has a sock-like structure, with the open end of the netting attached to fan **160.** The netting is preferably configured to inflate when provided air driven by fan **160.** The netting preferably includes a structure to prevent the contents of the netting from escaping when the fan **160** is stopped or the airflow of fan **160** is reversed. The structure may be any suitable structure, including, but not limited to, flaps or the like configured to close over the open end and the folding of the netting when the netting is not inflated. Preferably, fan **160** includes a grill or the like for preventing the netting from being drawn into the blades of fan **160** when the airflow is reversed.

According to certain preferred embodiments, fans **160** are configured to operate in several modes of operation, including, but not limited to, a pest reduction mode, a plant stressing mode, and a pollination mode. Each mode of operation is preferably characterized by operating parameters which may include, but are not limited to, at least one speed of rotation, a motorized impeller direction of rotation, an impeller blade pitch angle, and at least one fan pointing angle. Preferably, a pest reduction mode includes the steps of operating any or all of fans **160** at a speed and direction which generates a sufficient suction air flow whereby pests, such as insects or the like, in proximity of a fan are sucked into the blades of the fan. Pests which are sucked past the blades of the fan, and emerge alive or wholly intact, are trapped in net **162** of the fan. A preferred range of the speed of rotation for pest reduction is 2000-3200 rotations per minute (rpm). The range of speed as well as the adjustable impeller blade angle facilitates the reduction of pests of size in the range of 0.1-10 millimeters. Preferably, a pollination mode includes the steps of operating any or all of fans **160** at a rotational speed of up to 1000 rotations per minute (rpm), either in a reverse fan direction or with inversion of the blade pitch in order to create sufficient air flow towards the plants to transfer pollen. Preferably, a plant stressing mode includes the steps of operating any or all of fans **160** at a rotational speed of up to 3200 rotations per minute (rpm) in order to generate a more powerful airflow towards the plants, thereby increasing the sustainability and viability of the plants. While the adjustable fan settings seek to reduce the power consumed by fans **160,** the use of rechargeable power supply **150** supply power to the devices mounted to gantry **200** necessitates the capability to recharge power supply **150** quickly and efficiently.

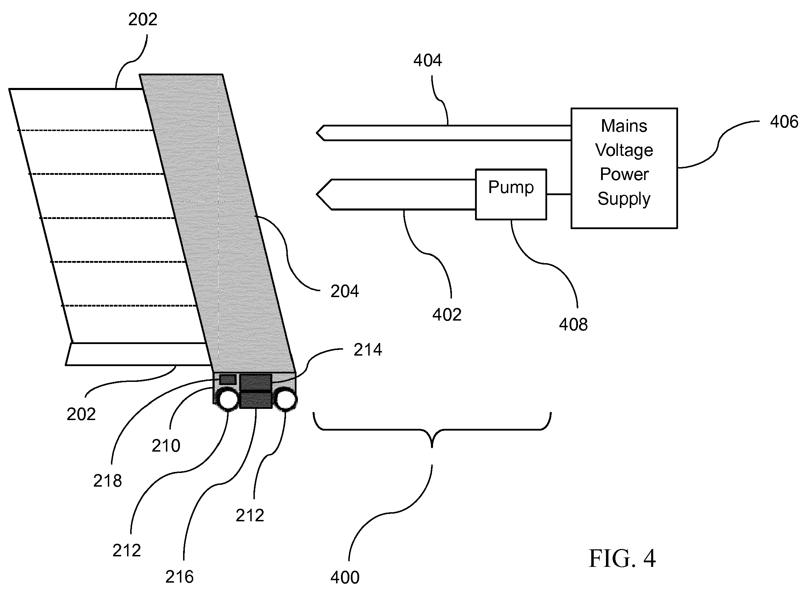

According to certain preferred embodiments, gantry **200** has one or more "home" positions where rechargeable power supply **150** can be recharged and tank **124** can be re-pressurized. With reference to FIG. 4, a "home" position is preferably defined by a home station **400** at or near an end **204** of the crop growing area. Home station **400** preferably includes a compressed air filling linkage **402** such as a hose with a releasable connector or the like for re-pressurizing tank **124** as well as a charging arrangement **404** for recharging rechargeable power supply **150.** Compressed air filling linkage **402** is preferably in connection with a pump **408,** which is preferably mounted outside the high-moisture growing area, and is powered by a mains voltage power supply **406.** Preferably, compressed air filling linkage **402** is manually connected to tank **124.** Preferably, charging arrangement **404** is configured to come into operative cooperation with rechargeable power supply **150** via a charging interface **152.** Types of charging arrangements may include, but are not limited to, electrical contacts, inductive chargers, and other suitable connections. In an exemplary embodiment, the operative cooperation between rechargeable power supply **150** and charging arrangement **404** is configured to become connected to the power supply whenever gantry **200** returns to its home station without requiring human intervention, thus resulting in the automatic recharging of rechargeable power supply **150** when gantry **200** is in home position **400.** Preferably, charging arrangement **404** includes a voltage converter. The voltage converter converts the electricity supplied by mains voltage **406** from AC electricity to DC electricity in order to supply rechargeable power supply **150.** Although the system as described thus far has pertained to a spraying system **110** mounted to a gantry **200** with a home position **400** for re-pressurizing the tank **124** via compressed air filling linkage **402** in connection with a pump **408** powered by a mains voltage power supply **406,** other embodiments are possible in which tank **124** is re-pressurized while the gantry **200** is not in a home position **400.** Furthermore, even where the principal source of air pressure for tank **124** is from pump **408,** it may be advantageous to provide the capability of topping up the air pressure while gantry **200** is away from its home position **400.** In such cases, a pressurization pump **180** mounted to gantry **200** is supplied power by rechargeable power supply **150.** Pressurization pump **180** re-pressurizes tank **124** when actuated by a control device associated with rechargeable power supply **150,** preferably flow controller **140.** Such an embodiment is particularly useful when rechargeable power supply **150** has enough charge to supply power to the necessary components of system **10,** but the compressed air in tank **124** falls significantly below the storage pressure such that the preferred spray out pressure cannot be generated without re-pressurizing tank **124.**

According to certain preferred embodiments, gantry **200** includes a platform **170** configured to transport objects. Objects to be transported may include, but are not limited to, tools, personnel, growing troughs, and mechanical equipment. Platform **170** preferably has a weight-carrying capacity of up to 1500 kilograms. It is preferred that platform **170** extends along the entire length of the gantry which overlies the crop growing area. Preferably, the length of platform **170** is at least 80% of the total length of the gantry. Preferably, a lifter **172** is attached to platform **170** for lifting and lowering the platform. Types of lifters may include, but are not limited to, hydraulic lifts, gear lifts, and scissor lifts, and may be manually operated or electrically actuated by power provided by rechargeable power supply **150.** Positioning information about growing troughs is advantageous by virtue of the lifting and transporting of growing troughs.

According to certain preferred embodiments, gantry **200** includes at least one RFID reader **190.** It is preferred that an RFID tag is placed in each growing trough in the crop growing area as well as the along the perimeter of the crop growing area along which gantry **200** is configured to operate. In such an embodiment, when gantry **200** passes over an RFID tag, RFID reader **190** transmits an interrogator signal and receives an authentication signal from the RFID tag. The authentication signals received by RFID reader **190** provide an indication as to the position of the growing troughs, as well as the treatment type for the plants in the growing troughs. The treatment type may include, but is not limited to, the liquid droplet size of the mist from spraying nozzles **122,** fan **160** operation modes, pesticide solution type, and any combination thereof. This is of particular value when the crop growing area is subdivided into different regions for different plants, where the different plants may require different treatment types. Preferably, RFID reader **190** is associated with a control device, most preferably flow controller **140.** Preferably RFID reader **190** is associated with a processor coupled to a data storage medium such as a memory with a database in order to match RFID tags with plant types and treatment types. The processor can be any number of computer processors including, but are not limited to, a microprocessor, an ASIC, a DSP, a state machine, and a microcontroller. Such processors include, or may be in communication with computer readable media, which stores program code or instruction sets that, when executed by the processor, cause the processor to perform actions. Types of computer readable media include, but are not limited to, electronic, optical, magnetic, or other storage or transmission device capable of providing a processor with computer readable instructions. It is preferred that the RFID reader **190** and RFID tags are operable in the low frequency (LF) band which is between 30 kHz and 300 kHz.

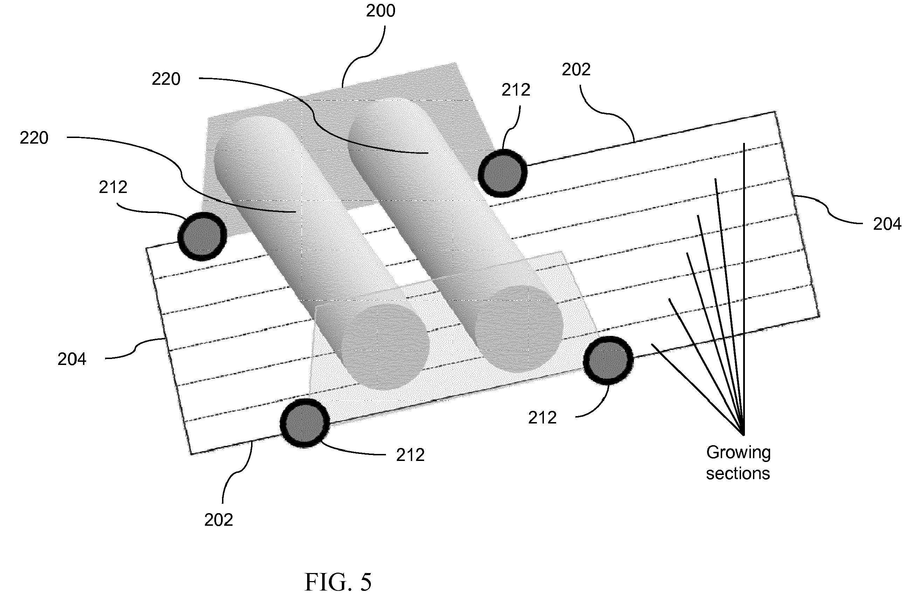

Although the system described thus far has pertained to a spraying system **110** mounted to a gantry **200,** where the spraying system **110** includes a pressure vessel **124,** other embodiments are possible in which one, or more preferably two, long air pressure tanks **220** are used to provide the pressurized air to spray nozzles **122** as well as to form a structural component of gantry **200.** In one preferred implementation of such an embodiment, as depicted in FIG. 5, air pressure tanks **220** are preferably substantially the same length as the total length of gantry **200.** Typically, air pressure tanks are manufactured from materials to create strong sidewalls, therefore the strength of the material forming air pressure tanks **220** can be exploited to serve the structural functions of gantry **200.** An advantage of using air pressure tanks **220** as a main structural component of gantry **200** is the prolonged amount of time where the spray out pressure is in the preferred range. This will reduce the number of times gantry **200** is required to dock at home position **400** to re-pressurize the air pressure source. Air pressure tanks **220** typically replace tank **124.** In all other respects, the structure and function of the system of FIG. 5 is analogous to that of the systems described above, and will be understood by reference to the above description.

Although the system described thus far has pertained to a spraying system **110** mounted to a single gantry **200** with wheels that move along the perimeter of a crop growing area to service an entire length of a growing area, optionally, a plurality of gantries **200** with mounted spraying systems **110** are deployed to move across a crop growing area, either together servicing the entire area with overlapping regions of coverage for use wherever needed, or by subdividing the crop growing area into a plurality of non-overlapping growing subsections with one gantry **200** deployed to move across each growing subsection. Each gantry preferably has its own "home location" for charging and refilling the air pressure tank.

Although the system described thus far has pertained to a spraying system **110** mounted to a gantry **200** with motorized wheel assemblies **210** mounted to gantry **200,** other embodiments are possible in which the wheel assemblies do not include a motor. In such an embodiment, a plurality of cables driven by a motor may be connected to gantry **200** in order to push and pull gantry **200** along the suitably shaped profile.

It will be appreciated that all controller devices in the above descriptions may be housed in a single processor or housed individually in a distributed group of processors and/or processing systems. Any or all of the processing may be executed locally on system **10** or in combination may be executed remotely via wired or wireless network or via a cloud based system.

It will be appreciated that the above descriptions are intended only to serve as examples, and that many other embodiments are possible within the scope of the present invention as defined in the appended claims.

## Claims

1. A mobile plant service system for treating plants in a crop growing area comprising:
(a) a transport device deployed for moving across the crop growing area;
(b) a spraying apparatus mounted to said transport device for delivering an atomized liquid to the plants in the crop growing area, comprising:
(i) a plurality of spray nozzles;
(ii) a pressure vessel in fluid flow connection with said plurality of spray nozzles configured for storing compressed air at a storage pressure;
(iii) a pressure regulating valve assembly in fluid flow connection with said pressure vessel;
(iv) a receptacle containing a liquid in fluid flow connection with said spray nozzles;
(c) a flow controller associated with said pressure regulating valve assembly; and
(d) a rechargeable power supply deployed to provide power to said flow controller,
wherein said flow controller is configured to actuate said pressure regulating valve assembly to allow the flow of a controlled release of compressed air to said plurality of spray nozzles at a spray out pressure.

2. The mobile plant service system of claim 1, further comprising a plurality of fans mounted to said transport device;
wherein each of said fans has variable rotary speeds and directions of rotation, and wherein each of said fans is associated with a fan controller,
and wherein said fan controller is configured to selectively actuate each of said fans to independently operate in a plurality of operational modes,
and wherein each of said operational modes corresponds to at least one rotary speed and direction of rotation.

3. The mobile plant service system of claim 1, further comprising an actuator associated with said fan controller; wherein said actuator is configured to adjust a pointing angle of each of said fans.

4. The mobile plant service system of claim 3, wherein said operational modes include:
(i) a pest reduction mode,
wherein any or all of said fans operate to create a suction air flow whereby pests in proximity of a fan are sucked into the blades of said fan;
(ii) a plant stressing mode,
wherein any or all of said fans operate at angles and speeds designed to stress a specified plant; and
(iii) a pollination mode,
wherein any or all of said fans operate at angles and speeds designed for artificial pollination of specified plants.

5. The mobile plant service system of claim 4, further comprising a plurality of nets with a sieve opening size of at most 0.5 millimeters, wherein said nets are attached to said fans;
and wherein said nets are configured to retain pests sucked into said fans when operating in said pest protection mode.

6. The mobile plant service system of any preceding claim, further comprising a plurality of wheel assemblies mounted to said transport device, wherein each of said wheel assemblies comprises:
(i) at least one wheel;
(ii) a braking arrangement associated with said at least one wheel;
(iii) a drive system associated with said at least one wheel; and
(iv) a wheel controller associated with said braking arrangement and said drive system,
wherein said at least one wheel is configured to operate along a profile disposed about the periphery of the crop growing area,
and wherein said rechargeable power supply is deployed to provide power to said drive system,
and wherein said wheel controller is configured to actuate said drive system to rotate said at least one wheel at an adjustable direction of rotation and to selectively operate said braking arrangement.

7. The mobile plant service system of any preceding claim, further comprising a home station with a stationary charging arrangement;
wherein said transport device has a home position in said home station,
and wherein said stationary charging arrangement is configured to come into operative cooperation with said rechargeable power supply when said transport device is in said home position.

8. The mobile plant service system of claim 7, wherein said home station further comprises a compressed air filling linkage associated with a mains voltage power supply;
wherein said compressed air filling linkage is deployed for connection with said pressure vessel when said transport device is in said home position,
and wherein said mains voltage power supply is an alternating current (AC) power supply configured to supply a voltage of at least 100 volts AC.

9. The mobile plant service system of any preceding claim, further comprising a platform mounted to said transport device,
wherein said platform extends along a majority of said transport device.

10. The mobile plant service system of any preceding claim, further comprising a lifter mounted to said transport device;
wherein said lifter is configured to lift growing troughs containing plants grown by hydroponics and/or aeroponics.

11. The mobile plant service system of any preceding claim, further comprising at least one RFID reader mounted to said transport device and operable to transmit an interrogator signal and to receive an authentication signal,
such that, wherein said at least one RFID reader passes over an RFID tag in a growing trough and transmits interrogator signals, authentication signals are generated, thereby indicating a position of the growing trough and a treatment type for the plants in the crop growing area.

12. The mobile plant service system of any preceding claim, wherein said receptacle is a reservoir containing a liquid; and
wherein said reservoir is in fluid flow connection with said pressure vessel, and wherein said pressure vessel is further configured to pressurize the liquid in said reservoir.

13. The mobile plant service system of any preceding claim, wherein said rechargeable power supply is a direct current (DC) power supply configured to supply a voltage of no more than 25 volts DC.

14. The mobile plant service system of any preceding claim, further comprising a pump associated with said rechargeable power supply and in fluid flow connection with said pressure vessel,
wherein said flow controller is further configured to actuate said pump to pressurize said pressure vessel.

15. The mobile plant service system of any preceding claim, wherein said spraying apparatus is configured to generate spray with a liquid droplet size in a range from 8-50 microns.
